# EUROPEAN PATENT APPLICATION

(11) **EP 2 606 748 A1**
(43) Date of publication of application: **26.06.2013**
(21) Application number: 12193987.0
(22) Date of filing: 23.11.2012
(51) Int. Cl.: A23L 1/275, A23G 3/32

(54) **Oil miscible water soluble color stable composition and process**

(30) Priority: 12.12.2011 US 201113316644
(71) Applicant: D.D. Williamson&Co., Inc., Louisville, KY 40206 (US)
(72) Inventor: LUHADIYA, Ashok, Cincinnati, OH Ohio 45248 (US)
(74) Representative: Findlay, Alice Rosemary

(57) **Abstract**

An aqueous-based food coloring concentrate is formed by blending a food-grade emulsifier with a food-grade organic solvent to form a blend which is then mixed with an aqueous solution of a food-grade colorant. The co-solvent must both disperse the emulsifier and be miscible in water. The formed concentrate is a single-phase product that can be mixed with oil or fat. If mixed with fat, it disperses evenly throughout the fat providing a uniformly-colored product without streaks or splotches. When combined with the oil it forms a single-phase product that remains stable for a period long enough to be applied to color the surface of other food products.

## Description

Coloring agents are used extensively in food products. Many of the coloring agents are soluble in oil, others are soluble in water. For example, bixin is soluble in oil while caramel color and anthocyanins are soluble only in water. With certain food products it is desirable to combine a water-soluble coloring agent with oil or fat. There are water-in-oil emulsions that include coloring agents. However, these products are opaque, require high energy input to achieve desired droplet size and are temperature sensitive. When combined with oil, the product is opaque and can form speckles when applied onto a food product.

The present invention is premised on the realization that an oil-miscible coloring agent can be formed by combining an emulsifier with a co-solvent and subsequently combining the emulsifier co-solvent blend with an aqueous phase containing a water-soluble coloring agent. This product, which is free of oil, when subsequently combined with oil forms a clear and transparent product in which the water-soluble coloring agent is uniformly dispersed throughout the oil phase allowing the colored oil to be applied to a food product and provide a uniformly colored surface. When the color concentrate is combined with a fat, it disperses uniformly throughout the fat, providing a uniform color without streaks or blotches. Further, the oil containing color concentrate can be heated prior to coating on to food products without separation of the aqueous phase.

Further, the present invention includes a method of forming an oil dispersible color concentrate. This method includes first combining the emulsifier with the co-solvent, which is a water miscible organic solvent. This forms a blend, which is combined with an aqueous solution of a coloring agent. This order of addition provides a unique color concentrate which easily and uniformly disperses in oil or fat. The use of this color concentrate to color food products is also incorporated within this invention.

The objects and advantages of the present invention will be further appreciated in light of the following detailed description of preferred embodiments.

An oil-miscible color concentrate includes an emulsifier, a co-solvent and an aqueous phase including a water-soluble coloring agent. The emulsifier is an edible or food grade. The emulsifier is a nonionic or anionic surfactant having both hydrophilic and lipophillic characteristics. In other words, it is dispersible in both water and oil or fat. Here the term oil is used interchangeably with fat and may be liquid or solid at room temperatures. Further, miscible and dispersible are used interchangeably herein.

The hydrophilic and lipophillic characteristic of an emulsifier can be more precisely defined by its hydrophobic lipophillic balance (HLB). For use in the present invention, the HLB of the emulsifier is from about 3 to 12, and preferably be 4 to 12, and in most applications be about 4 to 9. The emulsifier can be a blend of different emulsifiers having different HLBs where the blend of emulsifiers has an HLB within the desired limits. Typical food grade emulsifiers include mono and di-glyceride esters of diacetyltartaric acid, mono and di-glyceride esters of citric acid, mono and di-glyceride esters of lactic acid, dioctyl sodium sulfosuccinate, mono and di-glyceride esters of phosphoric acid, polysorbates, sorbitan esters of fatty acids, polyglycerol esters of fatty acids, ethoxylated mono and diglycerides of fatty acids, propylene glycol esters of fatty acids, calcium stearoyllactylate, sodium stearoyllactylate, lecithin and lecithin derivatives, such as hydroxylated lecithin; succinylated monoglyceride, glycerol monostearate and sucrose esters. The emulsifier acts to maintain the aqueous phase evenly dispersed throughout the oil phase when the color concentrate is combined with oil or fat. Therefore, there must be sufficient emulsifier to maintain the dispersion of the aqueous phase in the oil or fat.

Generally, the color concentrate will include from 3 to 30% by weight of the emulsifier, and generally from 4 to 25% and most likely 5 to 15% by weight. Emulsifier beyond 30% by weight in the color concentrate formulation may not provide any additional benefit, may alter the texture of the finished product where the color concentrate is used, reduce the color strength of the concentrate and/ or may be simply uneconomical.

The second component of the color concentrate is the co-solvent. The co-solvent is an organic, food grade material which is liquid at room temperature and is water miscible. Suitable products include low molecular weight alcohols, such as ethanol, glycerin, propylene glycol, isopropyl alcohol, polyethylene glycols, as well as lower molecular weight fatty acid esters such as caproic and caprylic acid esters of glycerol, again, which are liquid at room temperature and the mixtures thereof.

Not bound by any theory, the co-solvent allows the emulsifier to blend completely with the aqueous phase by increased dispersion of the emulsifier or surfactant. It also lowers the viscosity of the color concentrate, allowing it to be easily mixed. It also assists in maintaining the aqueous phase evenly dispersed throughout the oil when the concentrate is mixed. It works with the emulsifier to keep the color from bleeding back out into the aqueous phase. Generally, the color concentrate will include 3 to 70% by weight of the co-solvent, more typically 5 to 50%, and most likely 10 to 40% by weight.

The aqueous phase of the color concentrate is formed from water and a water-soluble coloring agent dissolved in the water. The coloring agent can be any edible coloring agent that is water soluble. Caramel is one such water-soluble coloring agent. Typically, class I, II, or IV caramels can be used. Other water-soluble coloring agents include: anthocyanins, betalains, tea extracts, polyphenols, anthraquinone and naphthoquinones, compounds such as cochineal and alkannet, safflower extract, fungal extracts, e.g., Monascus pigments and their derivatives, iridoid pigments, geniposide, cacao extract, and other water soluble food colors extracted from plant, insects, algae, marine life and animals may also be used. The water-soluble FD & C colors can also be used.

The amount of the coloring agent, or solids, in the aqueous phase may vary depending upon the desired end use of the product. Obviously, lower solids content in the aqueous phase will result in a weaker color. However, products with lower solids remain dispersed in oil for a longer period of time. The solid content of the aqueous phase can be preferably from 5 to 75%, more preferably 7 to 70%, and most preferably 10 to 65%. Excessively high solids in the aqueous phase may result in unstable color concentrate resulting in settling of the aqueous phase at the bottom due to higher viscosity and higher specific gravity.

Generally, the aqueous phase will form 30 to 94% of the color concentrate, more preferably 35 to 80%, and most preferably 40 to 70% by weight. Generally, it would be desirable to maximize the aqueous phase, but if the concentration of the aqueous phase is too high, it may not form a uniform dispersion when blended with oil or fat and may result in speckled finished product.

The order of addition to prepare the color concentrate is important. Initially, the emulsifier is blended with the co-solvent. The two are combined and may be heated to 60-70 °C and mixed until a uniform dispersion is formed. The emulsifier disperses in the co-solvent to form an emulsifier/co-solvent blend.

The aqueous phase is then mixed with the emulsifier/co-solvent blend. This is conducted at room temperature with a low-shear mixer. The end product is a color concentrate which is free of any added oil, stable, and a single-phase dispersion.

The color concentrate can be added to lipophillic food products such as fats and oils. For example, the color concentrate can be added to butter or lard, which can be incorporated into cake icing. It can be combined with palm kernel oil and used as a coating for snack foods. Other uses of this product to color food products may include but not limited to as cocoa powder replacer, popcorns, candy coating, confectionary and cake icings; browning compositions for microwavable foods, e.g., meat and fish products, French fries, frozen pies, animal and pet foods, compound coating compositions - e.g. sweet fat coating on pretzel; confectioner's coating, gourmet oils, low fat baked/ fried/ microwavable snacks foods, extruded snacks.

Non-food applications may include cosmetic preparations such as soaps and bath melts, massage bars, and lipsticks.

The color concentrate can be combined with oil such as vegetable oil by adding the color concentrate to the oil and mixing the combination together, again with a low-shear mixer at room temperature. The color concentrate will disperse uniformly throughout the oil and provide a translucent, non-cloudy product, which has the appearance of a single phase. This product can then be sprayed or coated onto a food product to provide a color coating on the surface of the food product. On standing for several hours (2 hrs or more), the aqueous phase may separate out from the oil phase. Therefore, the colored oil should be used prior to phase separation. Stirring the oil blend during use may help in prolonging the separation of the phases.

The amount of the color concentrate added to either a fat or oil will depend on the desired end use and the solids content of the color concentrate. The concentrate may be added to oil or fat in a range of 0.01 % to 70% by weight of the oil, depending upon the strength of the color concentrate and the hue desired.

The invention will be further appreciated in light of the following detailed examples.

### EXAMPLE 1

| | |
|---|---|
| Lecithin (HLB4) %w/w | 10 |
| Propylene glycol %w/w | 30 |
| Liquid Caramel Class IV %w/w | 60 |

Lecithin is dispersed in propylene glycol. To the uniform blend liquid Caramel is added having soluble solid concentrations of 65%. This is blended to a uniform mix.

A drop of the above oil miscible caramel concentrate is mixed with 10 g of vegetable oil. The caramel color disperses in oil giving a caramel colored transparent single phase.

### EXAMPLE 2

| | |
|---|---|
| Hydroxylated Lecithin (HLB 9) %w/w | 5 |
| Propylene glycol %w/w | 30 |
| Liquid Caramel Class IV %w/w | 65 |

Lecithin is dispersed in propylene glycol. To the uniform blend liquid Caramel is added having soluble solid concentrations of 65%. This is blended to a uniform mix.

A drop of the above oil miscible caramel concentrate is mixed with 10 g of vegetable oil. The caramel color disperses in oil giving a caramel colored transparent single phase.

### EXAMPLE 3

| | |
|---|---|
| Mono, di-glyceride (HLB 3) %w/w | 6.7 |
| Tween 80 (HLB 15) | 6.7 |
| Propylene glycol %w/w | 6.7 |
| Liquid Caramel Class IV %w/w | 79.9 |

Mono, di-glyceride and Tween 80 are blended with stirrer to give the HLB value of 9. Propylene glycol is added with continuous stirring. The blend is heated to 60 - 70 °C for 10 minutes to disperse emulsifier in propylene glycol. The mix is cooled to room temperature and caramel having 65% solids is added. The mix is stirred for 15 minutes and passed through high shear mixer.

A drop of the above oil miscible caramel concentrate is mixed with 10 g of vegetable oil. The caramel color disperses in oil giving a caramel colored transparent single phase.

### EXAMPLE 4

| | |
|---|---|
| Lecithin (HLB 4) %w/w | 10 |
| Propylene glycol %w/w | 30 |
| Elderberry Juice Conc. %w/w | 60 |

Lecithin is dispersed in propylene glycol. To the uniform blend liquid elderberry Juice Conc. having 35 percent soluble solids is added. This is blended to get uniform mix.

A drop of the above oil miscible anthocyanin concentrate is mixed with 10 g of vegetable oil. The blue color disperses in oil giving a red colored transparent single phase.

### Comparative Sample Analysis:

### Analytical Methods:

Color Index Measurement: - Known weight of the color concentrate is dispersed in water or oil and made to 100 ml. The water dispersion is filtered using Whatman filter paper #40. The absorbance is measured at 560nms using a spectrophotometer. Commercially available oil miscible caramel product number 764 from DDWilliamsons, U.S.A. was evaluated versus the test sample as prepared by example 2. The samples were evaluated for color index expressed as absorbance in water and in oil at 560nm.

| | A @560nm in Water at 1.75% w/w | A @560nm in Oil at 5.0% w/w |
|---|---|---|
| Test Sample as per Example 2 | 0.507 | 1.527 |
| Commercial sample | 0.665 | 0.620 |

The commercial sample failed to color the oil even though it had a higher color Index in water. The commercial sample was visibly turbid having fine droplets of caramel color with no visible caramel color in the oil. Thus, the commercial product was not uniformly dispersed in the oil compared to the product of the present invention, which was clear in the oil.

Unlike oil-in-water color concentrates, the color concentrate of the present invention blends with oil or fat, providing a single phase in which the color is uniform throughout the oil or fat. This provides a much more even distribution of the coloring agent throughout the oil or fat, providing a better aesthetic appearance to the final food product. This is to be contrasted with an oil-in-water or water-in-oil color concentrate which would provide a cloudy appearance and when mixed with further oil would still not provide a single phase product.

## Claims

1. A method of preparing an oil-miscible aqueous based food coloring concentrate comprising:
blending an emulsifier with a co-solvent to form a blend wherein said emulsifier has an HLB of 3-12and wherein said co-solvent is an organic, water miscible liquid; and
combining said blend with an aqueous solution of a water-soluble food colorant.

2. The method claimed in claim 1 wherein said coloring concentrate includes 3-30% by weight emulsifier, 3-70% by weight co-solvent, and 30-94% by weight aqueous solution, preferably 4-25% emulsifier, 5-50% co-solvent and 35-80% aqueous solution, and more preferably 5-15% emulsifier, 10-40% co-solvent, and 40-70% aqueous solution.

3. The method claimed in either claim 1 or claim 2 wherein said emulsifier is selected from the group consisting of mono and di-glyceride esters of diacetyltartaric acid, mono and di-glyceride esters of citric acid, mono and di-glyceride esters of lactic acid, dioctyl sodium sulfosuccinate, mono and di-glyceride esters of phosphoric acid, polysorbates, sorbitan esters of fatty acids, polyglycerol esters of fatty acids, ethoxylated mono and diglycerides of fatty acids, propylene glycol esters of fatty acids, polysorbates, calcium stearoyllactylate, sodium stearoyllactylate, lecithin and lecithin derivatives, such as hydroxylated lecithin, succinylated monoglyceride, glycerol monostearate, sucrose esters, and combinations thereof.

4. The method claimed in any preceding claim wherein said co-solvent is selected from the group consisting of lower molecular weight alcohols, glycerin, propylene glycol, lower molecular weight fatty acid esters and the combinations thereof.

5. A food product comprising a coloring concentrate including an emulsifier having an HLB of 3-12 combined with a water-miscible, organic, liquid an aqueous solution of a water-soluble colorant combined with a lipophillic food product wherein the coloring concentrate is uniformly dispersed in the lipophillic food product.

6. The composition claimed in claim 7 wherein said lipophillic food product is oil or fat

7. The composition claimed in either claim 5 or claim 6 comprising 0.01- 70% coloring concentrate.

8. The composition claimed in any one of claims 5 to 7 wherein said coloring concentrate comprises 3-30% emulsifier, 3-70% co-solvent, and 30-94% aqueous solution.

9. The composition claimed in any one of claims 5 to 8 wherein said coloring concentrate is formed by blending said emulsifier with said co-solvent to form a blend and subsequently blending said blend with said aqueous solution.

10. The composition claimed in any one of claims 5 to 9 wherein said emulsifier is selected from the group consisting of mono and di-glyceride esters of diacetyltartaric acid, mono and di-glyceride esters of citric acid, mono and di-glyceride esters of lactic acid, dioctyl sodium sulfosuccinate, mono and di-glyceride esters of phosphoric acid, polysorbates, sorbitan esters of fatty acids, polyglycerol esters of fatty acids, ethoxylated mono and diglycerides of fatty acids, propylene glycol esters of fatty acids, polysorbates, calcium stearoyllactylate, sodium stearoyllactylate, lecithin and lecithin derivatives, succinylated monoglyceride, glycerol monostearate, sucrose esters, and combinations thereof.

11. The composition claimed in any one of claims 5 to 10 wherein said organic liquid is selected from the group consisting of ethanol, glycerol, propylene glycol, lower molecular weight fatty acid esters, and combinations thereof.

12. The composition claimed in any one of claims 5 to 11 wherein said emulsifier is lecithin and its derivatives.

13. The composition claimed in any one of claims 5 to 12 wherein said water-soluble food colorant is caramel.

14. The composition claimed in any one of claims 5 to 13 wherein said water-soluble food colorant is selected from plant , algae, insect, marine and animal extracts.

15. A method of coating a food product comprising mixing a coloring agent produced by the method of any one of claims 1 to 4 with an oil to form a single-phase colored oil and spraying said colored oil onto a surface of a food product.
